# EUROPEAN PATENT APPLICATION

(11) **EP 3 822 239 A1**
(43) Date of publication of application: **19.05.2021**
(21) Application number: 19834466.5
(22) Date of filing: 09.07.2019
(51) Int. Cl.: C04B 18/12, C04B 18/04, C04B 18/14, C04B 22/14, C02F 11/145

(54) **MORTAR OR CONCRETE MATERIAL CONTAINING METALLIC MINERAL EXTRACTION RESIDUES AND METHOD FOR PRODUCING SAME**

(30) Priority: 11.07.2018 ES 201830690
(71) Applicant: Universidad de Murcia, 30100 Espinardo (ES)
(72) Inventor: MARTINEZ SANCHEZ, María José, 30100 Espinardo (ES); PEREZ SIRVENT, Carmen, 30100 Espinardo (ES); MESEGUER SERRANO, Fernando, 30100 Espinardo (ES)
(74) Representative: Isern Patentes y Marcas S.L.
(86) International application number: PCT/ES2019/070478
(87) International publication number: WO 2020/012050

(57) **Abstract**

The present invention relates to a mortar or concrete material comprising cement, water, fine aggregate and coarse aggregate, wherein the fine aggregate is partially replaced by metallic mineral extraction residues (MMERs) not subjected to thermal treatment, with a pH of less than 7, with a particle size of less than 4 mm, and partially stabilised with limestone material that comprises at least 60% calcite with a particle size of less than 63 µm. The present invention also relates to the method for preparing said material and the use thereof to prepare construction materials.

## Description

### TECHNICAL FIELD

The present invention falls within the field of reusing residues or waste derived from mining operations, and the treatment thereof for manufacturing non-structural mortars or concretes.

### BACKGROUND OF THE INVENTION AND STATE OF THE ART

The powerful development experienced by countries worldwide during the twentieth century and the start of the current century has created strong competition for natural resources that has rendered current land use unsustainable, decreasing the availability and long-term viability thereof and converting it today into a non-renewable natural resource.

Moreover, metallic mining carried out over the centuries has left a large ecological liability in the form of large masses of residues accumulated in dumps, dams made of floating sludge or ponds and even in marine areas.

Metallic mining residues that have hazardous substances in concentrations that can lead to ecotoxicity come from the exploitation of these types of minerals, classified according to the European List of Waste with code 01 01 01, and the benefit or concentrate thereof, method which is performed by means of a non-thermal physical and chemical treatment. Depending on the metal content and, mainly, the sulphur content in the form of sulphides, the effect on the environment and living beings can become critical.

Furthermore, limestone filler residues coming from the numerous aggregate sorting plants make up an inert residue which has a strong environmental impact, since current ways of using it are not sufficiently developed.

The EU seeks to alleviate these tensions through its sustainable development policies, replacing a linear economy based on production, consumption and disposal with a circular economy wherein "theoretically disposable" materials are continuously reincorporated into the production process, preparing new products or raw materials.

The homogeneous mixture of water, aggregates and cement in specific proportions gives rise to two types of materials commonly known as mortars or concretes, depending on the granulometry of the aggregates used. Of all the properties thereof, the most important is that this mixture, when it comes in contact with water, reacts and becomes an easily mouldable paste which quickly hardens like artificial stone and reaches a high strength, property which has made this material the primary construction element from the beginnings of the Roman Empire to present day.

Over time, the features thereof have evolved in parallel with the development of societies, improving, among other aspects, the tests which are carried out in order to ensure the quality thereof and the additives used in the preparation thereof.

Today, studies on concrete focus on achieving and, if possible, combining two main objectives: the recovery of residues as a method to alleviate the overexploitation of natural resources and/or the improvement of some of the properties thereof, either by addition or by total or partial substitution as one of the essential components thereof.

There are studies which analyse the possibility of using PET waste as a partial substitute for aggregates in the preparation of cement mortars, such as the one by [MAGARIÑOS O.E., et. al., "Estudio de morteros que contienen escamas de plástico procedente de residuos post-industriales" (Study of mortars with industrial residual plastic scales). Materiales de Construcción, 1998, Vol. 48 (250)]. In this paper, after studying different substitution percentages and analysing the features for each of them, several economic, social and ecological benefits are deduced for why these residues should be used as such.

Other researchers focus their efforts on studying the partial substitution of some of the basic elements that make up concrete with another material or residue, such as changing certain quantities of cement for volcanic scoria and the results of which are satisfactory under certain premises. [AL-SWAIDANI A.M., "Producción de hormigones más durables y sostenibles utilizando escoria volcánica como sustitutivo de cemento" (Production of more durable and sustainable concretes using volcanic scoria as cement replacement). Materiales de Construcción. 2017, Vol. 67 (326)].

There are also those who suggest adding residues directly to the original mixture, such as the paper prepared by [LOPEZ-ZALDIVAR O., et. al., "Morteros de cemento mejorados con la adición de cenizas volantes carbonatadas provenientes de la incineración de residuos" (Improved cement mortars by addition of carbonated fly ash from solid waste incinerators). Materiales de Construcción. 2015, Vol. 65 (319)], wherein it proposes the production of cement mortars to which carbonated fly ash is added not as a substitute but as an additional element, which causes a 25% increase in strength with respect to the reference values.

In addition to these studies, there are several studies on how to improve the properties of mortar/concrete by adding residues to this mixture. Nevertheless, all of them are carried out with foundry slag or fly ash, residues which have necessarily undergone thermal treatment in any of the steps prior to the generation thereof and which therefore have little or nothing to do with the ones used in this invention, direct discharge residues obtained by means of physical and chemical treatment, with high potential acidity and high content of soluble heavy metals and/or transition metals and whose only aim up until now is dumping hazardous materials, even being classified in the European List of Wastes with different codes: 10 and 01 01 01, respectively.

The reintroduction of these residues into the production chain would be in accordance with Law 22/2011, which would comply with the Europe 2020 Strategy and avoid one of the immense problems derived from these types of exploitations.

Thus, there is a need to provide a mortar or concrete material which gives rise to denser materials, with a good 28-day compressive strength and which enable elements to be retained by any means of transfer and, therefore, which are optimal for use as a by-product in the construction field.

### BRIEF DESCRIPTION OF THE INVENTION

The present invention solves the problems described in the state of the art since it provides a method for preparing a mortar or concrete material starting from metallic mineral extraction residues which gives rise to a material with good 28-day compressive strength properties since it exceeds 15 MPa.

Thus, in a first aspect, the present invention relates to a non-structural mortar or concrete material (hereinafter mortar or concrete material of the present invention), comprising cement, water, fine aggregate and coarse aggregate, wherein the fine aggregate is partially replaced by metallic mineral extraction residues (MMERs) not subjected to thermal treatment, with a pH of less than 7, with a particle size of less than 4 mm (natural size or by grinding), and which are partially stabilised with limestone material that comprises at least 60% calcite with a particle size of less than 63 µm.

For the purposes of this invention, the following definitions will be applied:
01. "LoW": European List of Waste.
02. "MMERs": residues classified on the European List of Waste with code 01 01 01 "Metallic Mineral Extraction Residues", specifically, all those derived from the exploitation and concentration operations of minerals from Pyrite-Blende-Galena (PBG) mines with minerals generating potential acidity. Likewise, residues from the exploitation of other metallic sulphides, oxides and carbonates which make up metal ores of economic interest are included, such as iron, lead, copper, mercury, cadmium, zinc, nickel, silver, gold, etc.
03. "EHE-08": code on structural concrete 2008.
04. "Recovery": any operation that mainly results in the residue having a useful purpose by replacing other materials which would otherwise have been used to fulfil a particular function, or wherein the residue is prepared to fulfil that function in the facility or in the economy in general.
05. "Hazardous substance": substance classified as hazardous as they meet the criteria set out in Annex I, parts 2 to 5, of Regulation (EC) No. 1272/2008.
06. "Heavy metal": any compound made of antimony, arsenic, cadmium, chromium (VI), copper, lead, mercury, nickel, selenium, tellurium, thallium and tin, as well as these substances in their metallic forms, provided they are classified as hazardous.
07. "Transition metals": scandium, vanadium, manganese, cobalt, copper, yttrium, niobium, hafnium, tungsten, titanium, chromium, iron, nickel, zinc, zirconium, molybdenum and tantalum, as well as these substances in their metallic forms, provided they are classified as hazardous substances.
08. "Stabilisation": process that changes the hazardousness of the constituents of the residue and transforms it from hazardous to non-hazardous.
09. "Solidification": process that only changes the physical state of the residue by means of additives without changing the chemical properties thereof.
10. "Partially stabilised residues": residues containing, after the stabilisation process, hazardous constituents that have not been completely transformed into non-hazardous constituents and that can pass into the environment in the short, medium or long term.

In a more particular embodiment, the mortar or concrete material of the present invention comprises:
- at least 150 kg/m³ of cement,
- fine aggregate, replaced in at least 20% by weight of the total fine aggregate by MMERs and limestone filler,
- 0-70% by weight of coarse aggregate,
- at least 90 kg/m³ of water.

In another more particular embodiment, the mortar material of the present invention comprises:
- at least 150 kg/m³ of cement,
- fine aggregate, replaced in at least 20% by weight of the total fine aggregate by MMERs and limestone filler,
- at least 90 kg/m³ of water.

In another more particular embodiment, the concrete material of the present invention comprises:
- at least 150 kg/m³ of cement,
- fine aggregate, replaced in at least 20% by weight of the total fine aggregate by MMERs and limestone filler,
- 0-70% by weight of coarse aggregate, preferably between 40 - 70% by weight of coarse aggregate
- at least 90 kg/m³ of water,

In the present invention, the term cements refers to those cements specified in table A. 18.2, of Annex 18 of EHE-08, preferably, referring to sulphate resisting cements (SR cements).

In another aspect, the present invention relates to a method for preparing mortar or concrete material of the present invention, (hereinafter method of the present invention) starting from metallic mineral extraction residues MMERs not subjected to thermal treatment and with a particle size of less than 4 mm (natural size or by grinding), as described above, comprising the following steps:
a) partial stabilisation of the MMERs with limestone materials that comprise at least 60% calcite and a particle size of less than 63 µm, until reaching a pH comprised between 7-10,
b) homogenisation of the mixture obtained in a) with water until the saturation point,
c) addition of cement, water and aggregates,
d) homogenisation of the mixture obtained in step c.

In another more particular embodiment, the aggregate from step c) of the method of the present invention is selected from among fine aggregate with a particle diameter less than 4 mm, coarse aggregate with a particle diameter greater than 4 mm and mixtures thereof.

In another aspect, the present invention relates to the use of the non-structural mortar or concrete material of the present invention for preparing construction materials.

In the present invention, the term construction materials refers to materials for preparing coatings, footpaths, curbs, bollards, planters, drains, sewer pipes, filler concretes, mass concrete walls, submerged blocks, harbour breakwaters, safety barriers on motorways and highways, among others.

### DETAILED DESCRIPTION OF THE INVENTION

The method for implementing the present invention was carried out as described below:
Once the preliminary study of characterisation and risk analysis of the contaminated location containing the MMERs was carried out, a number of representative samples were taken, depending on the volume of residues and the judgment of the expert, and they were taken to the laboratory.

With the residues in the laboratory, they were characterised chemically and mineralogically and, at the same time, a granulometric analysis was performed, grinding all particles retained in the UNE-EN 933-2 sieve with a 4 mm opening to a suitable size.

The partial stabilisation phase involves the use of a limestone material that contains more than 60% calcite and the particle size is less than 63 microns, with which the pH of the MMERs was stabilised to a neutral or slightly basic value, immobilising the soluble metals or preventing them from precipitating into insoluble forms.

To this end, the acid generation potential of the residues was determined, as described in the UNE-EN 15875 standard.

This method was performed with the mixture at the saturation point in water in order to force the reaction and to subsequently prevent the MMERs from attacking some other component and/or taking a portion of the water intended to react with the cement due to hygroscopic phenomena or structural changes during the different crystallisation phases.

If for any reason it is not possible to execute this phase satisfactorily, the residues will be discarded and properly managed.

Next, the doses were chosen for cement, water, coarse aggregate (if concrete is to be manufactured), partially stabilised MMERs and fine aggregate (if the replacement thereof is not complete). The proportion of each of these components, with respect to the cement, was a personal choice, except for the limestone material which, as cited above, will depend on the acid generation potential of the MMERs, and it will depend, to a greater or lesser extent, on the final features of the desired product.

As cited in Annex 18 of EHE-08, the only restriction for non-structural concretes is that the cement dose and the minimum strength must be 150 kg/m³ and 15 N/mm², respectively.

The method for mixing the different components may be performed by using any method which ensures the homogeneity of the product. The addition of MMERs will be carried out after partial stabilisation, thus preventing them from reacting with any other component of the mixture.

After the manufacturing process, the product was subjected to mechanical tests, determining the compressive strength thereof according to the UNE-EN 12390-3 standard for concretes or the flexural and compressive strength thereof for mortars according to the UNE-EN 196-1 standard, physical/chemical tests such as density, pH, conductivity, etc., and a study on stabilisation of soluble metals, analysing the curing water, in order to corroborate the perfect stabilisation and encapsulation of the residues.

If the results obtained during the previous step are satisfactory, the stabilised/solidified product can have several industrial applications, mainly in the construction field, otherwise it will be discarded and the process will have to be started again from the stabilisation.

The product obtained has multiple applications in the construction sector, such as: coatings, footpaths, curbs, bollards, planters, drains, sewer pipes, filler concretes, mass concrete walls, harbour breakwaters, safety barriers on motorways and highways, wastewater ducts, unreinforced precast slabs, among others.

The promotion and development of these materials implies significant environmental, economic and social benefits, such as the protection of ecosystems and the regeneration of highly degraded areas, greater availability of raw materials by drastically reducing the exploitation of natural resources, reduction of CO₂ emissions to the atmosphere, creation of new markets, promoting less dependence on the import of raw materials, etc.

### EMBODIMENT OF THE INVENTION

*Example 1: method for manufacturing six cylindrical concrete specimens measuring 30 x 15 cm, with replacement of 50% of the fine aggregate by an equivalent mass of MMERs plus limestone filler.*

The specimens were classified into two groups according to the manufacturing method thereof:
- Group A: Normal manufacturing method. Specimens wherein the mass of "MMERs + Limestone Filler" is added dry.
- Group B: Manufacturing method modified according to the method of the proposed invention. Specimens wherein the mass of "MMERs +

Limestone Filler" is added at the saturation point in water.

### GROUP A and B:

The origin of the residues used for both group A and group B was "La Bahía de Portman", one of the most polluted areas in the Iberian Peninsula. There, it is estimated that a total of 60 million tonnes of hazardous residues like the ones described above is present, product of the intense mining activity carried out by the Lavadero Roberto for much of the 20th century.

The sample found was encrusted and larger than 4 mm, so it was necessary to grind it to a size of less than 4 mm. The chemical, mineralogical and granulometric characterisation carried out in the laboratory on the selected samples yields the following particular values:

| **MMER CHARACTERISTICS** | | **VALUE** |
|---|---|---|
| MUNSELL COLOUR | | 2.5Y, 5/6 |
| PARTICLE SIZE (after grinding) | | < 4 mm |
| USDA TEXTURAL CLASS | | loam/silt |
| BET SPECIFIC SURFACE AREA | | 16 m²/g |
| RELATIVE DENSITY | | 2.6 g/cm³ |
| pH | | 2.5 |
| | | |

| **MMER COMPOUNDS** | **MOLECULAR FORMULA** | **PERCENTAGE** |
|---|---|---|
| NATROJAROSITE | NaFe3⁽³⁺⁾(SO₄)₂(OH)₆ | 60 % |
| SIDERITE | FeCO₃ | 15 % |
| GYPSUM | CaSO₄.2H₂O | 4 % |
| MAGNETITE | Fe²⁺(Fe³⁺)₂O₄ | 5 % |
| PYRITE | FeS₂ | 10 % |
| ' QUARTZ | SiO₂ | 3 % |
| OTHER | --- | 3 % |
| | | |

| **MMER ELEMENTS** | **TOTAL** | **SOLUBLE** |
|---|---|---|
| LEAD | 3,304 mg/kg | 15 mg/kg |
| ZINC | 3,205 mg/kg | 306 mg/kg |
| CADMIUM | 56 mg/kg | 3.8 mg/kg |
| COPPER | 160 mg/kg | 82 mg/kg |
| ARSENIC | 632 mg/kg | 4.1 mg/kg |
| IRON | 38 % | 25 % |
| SULPHUR | 15.01 % | < LOD |

Depending on the mineralogy of the residue and following the steps described in the UNE-EN 15875 standard, it was determined that in order to partially stabilise it, it had to be mixed with a mass of limestone material equivalent to 30% of the total mass of the residue.

The limestone material used to carry out this method was a filler coming from aggregate sorting plants. Since it is found in abundance, it is economical and has a high carbonate content and the characteristics of which are as follows:

| **FILLER CHARACTERISTICS** | **VALUE** | |
|---|---|---|
| MUNSELL COLOUR | 7.5 YR 8/2 | |
| AVERAGE PARTICLE SIZE | 55 µm | |
| USDA TEXTURAL CLASS | loam | |
| BET SPECIFIC SURFACE AREA | 9 m²/g | |
| RELATIVE DENSITY | 2.3 g/cm³ | |

| **FILLER CHARACTERISTICS** | | **VALUE** |
|---|---|---|
| pH | | 8.3 |
| | | |

| **FILLER COMPOUNDS** | **MOLECULAR FORMULA** | **PERCENTAGE** |
|---|---|---|
| CALCITE | CaCO₃ | 84 % |
| DOLOMITE i | CaMg(CO₃)₂ | 6 % |
| PHYLLOSILICATES | illite | 3 % |
| QUARTZ | SIO₂ | 7 % |
| | | |

| **FILLER ELEMENTS** | **TOTAL** | **SOLUBLE** |
|---|---|---|
| LEAD | < LOD | < LOD |
| ZINC | < LOD | < LOD |
| CADMIUM | < LOD | < LOD |
| COPPER | < LOD | < LOD |
| ARSENIC | < LOD | < LOD |
| IRON | < LOD | < LOD |
| SULPHUR | < LOD | < LOD |

### GROUP A:

The mixing of the residue with the limestone filler was done by the dry method, stirring both masses between 5 and 10 min, in order to ensure the homogeneity thereof.

### GROUP B:

The mixing of the residue with the limestone filler was done by the wet method, bringing both masses almost to the saturation point in water, for which the necessary amount thereof was added directly from the urban network and constantly stirred, between 5 and 10 min, in order to ensure the homogeneity thereof.

### GROUP A and B:

Once the MMERs were partially stabilised, the concrete was then manufactured which, eventually, entailed the complete stabilisation thereof.

To this end, and once again based on mineralogy, an I 32.5 N/SR UNE 80303-1 cement was used, which corresponds to a sulphate resisting Portland cement with a normal strength of 32.5 MPa.

The chosen dose was determined to prepare a common mass concrete with a 28-day compressive strength of 20 MPa, and it has:
- 250 kg/m³ of cement.
- 480 kg/m³ of fine aggregate with 50% replacement:
   ∘ 240 kg/m³ of conventional fine aggregate.
   ∘ 240 kg/m³ of homogeneous mixture and at the saturation point in water of MMERs and limestone filler.
- 1,600 kg/m³ of coarse aggregate.
- 175 kg/m³ of water.

The use of a rotating drum system to mix all these components ensures the homogeneity of the product. The mass to be taken from each of the materials will depend on the density thereof and on the volume of product to be manufactured.

### GROUP A:

When the partially stabilised and unsaturated residues were added to water, it was observed that they started to swell when they captured the dosing water that should react with the cement.

As the mixing time progressed, instead of forming, as one might expect, a homogeneous cemented mass with a dense/semi-fluid appearance, solid non-cemented aggregates with a spherical shape started to form which made it very difficult, or almost impossible, to fill the moulds of the specimens evenly.

As such, it was necessary to add between 50 and 100% extra water compared to what was initially proposed in order to achieve a minimally workable paste and, despite this, the final appearance was not that of concrete for use.

24 to 48 hours after the moulds were filled, demoulding was carried out.

The appearance was of a material in a solid state which had, at first glance, structural problems, since interstitial voids were seen on the surface of the specimens.

Once the demoulding phase had been carried out, the specimens were placed in individual containers and were completely covered with water, staying in these conditions for, at least, 28 days.

### GROUP B:

When partially stabilised residues almost to the saturation point were added in water, it was observed that a homogeneous mass with a dense/semi-fluid appearance started to form, which made it possible to easily fill the moulds of the specimens.

24 to 48 hours after the moulds were filled, the demoulding phase was carried out.

The appearance had by the specimens with the method proposed by this invention was a solid and structurally compact material.

Once the demoulding phase had been carried out, the specimens were placed in individual containers and were completely covered with water, staying in these conditions for, at least, 28 days.

### GROUP A and B:

Every day, or if establishing another longer time interval is considered appropriate, a sample of these waters was taken and chemical parameters such as pH, electrical conductivity and the content of soluble metals were analysed, among others.

After 28 days of curing, the specimens were extracted and subjected to compressive strength tests.

The results detailed below represent the average value of the experiments performed in the laboratory for each group during the research period prior to the writing of this invention.

| **28-DAY PARAMETERS** | **INITIAL** | **GROUP A** | **GROUP B** |
|---|---|---|---|
| pH of curing water (---) | 6.95 | 10.10 | 11.97 |
| Electric cond. of curing water (mS/cm) | 2.09 | 13.63 | 12.02 |
| Soluble Metals of curing water (ppm) | < LOD | < LOD | < LOD |
| Compressive Strength of specimens (MPa) | | 3.8 | 17.5 |
| Density of specimens (kg/m³) | | X | 2,244 |
| Suspended particles (%) | 0 | 14 | 0 |

### GROUP A:

Specimens manufactured according to the normal method:
- retained soluble contaminants, but did not retain all the particulates.
- did not reach the minimum compressive strength required by EHE-08 to be used as non-structural concretes.

Consequently, they have no application in the construction field.

### GROUP B:

The specimens manufactured according to the modified method proposed by this invention:
   - retained soluble and particulate contaminants, preventing dispersion to the medium.
   - clearly overcame the minimum compressive strength required by EHE-08 to be used as non-structural concretes.

Consequently, they can be used in various applications as non-structural concretes in the construction field.

## Claims

1. A mortar or concrete material comprising cement, water, fine aggregate and coarse aggregate, **characterised in that** the fine aggregate is partially replaced by metallic mineral extraction residues (MMERs) not subjected to thermal treatment, with a pH of less than 7, with a particle size of less than 4 mm, and partially stabilised with limestone material that comprises at least 60% calcite with a particle size of less than 63 µm.

2. The mortar or concrete material according to claim 1, comprising:
- at least 150 kg/m³ of cement,
- fine aggregate, replaced in at least 20% by weight of the total fine aggregate by MMERs,
- 0-70% by weight of coarse aggregate,
- at least 90 kg/m³ of water.

3. A method for preparing mortar or concrete material starting from metallic mineral extraction residues MMERs not subjected to thermal treatment and with a particle size of less than 4 mm according to any of claims 1-2, comprising the following steps:
a) partial stabilisation of the MMERs with limestone materials that comprise at least 60% calcite and a particle size of less than 63 µm, until reaching a pH comprised between 7-10,
b) homogenisation of the mixture obtained in a) with water until the saturation point,
c) addition of cement, water and aggregates,
d) homogenisation of the mixture obtained in step c).

4. A use of a mortar or concrete material according to any of claims 1-2 for preparing construction materials.

5. The use of a mortar or concrete material according to claim 4, wherein the construction materials are for coatings, footpaths, curbs, bollards, planters, drains, sewer pipes, filler concretes, mass concrete walls, submerged blocks, harbour breakwaters, safety barriers on motorways and highways, wastewater ducts, precast slabs.
